# EUROPEAN PATENT APPLICATION

(11) **EP 4 390 666 A1**
(43) Date of publication of application: **26.06.2024**
(21) Application number: 22216279.4
(22) Date of filing: 23.12.2022
(51) Int. Cl.: G06F 8/10, G05B 19/042, G06F 8/35, G05B 19/418, G06F 8/36

(54) **METHOD AND SYSTEM FOR AUTOMATIC GENERATION OF DOMAIN BASED BINARY CODE FOR PROGRAMMABLE LOGIC CONTROLLERS**

(71) Applicant: Siemens Aktiengesellschaft, 80333 München (DE)
(72) Inventor: ANTONY, Elvis, 560102 Bangalore, Karnataka (IN); LEELAVATHY, Grace, 635126 Hosur, Tamilnadu (IN); S, Subramanyam, 641041 Comabatore (IN)
(74) Representative: Isarpatent

(57) **Abstract**

The present invention provides a method and system for automatic generation of domain based binary code for a programmable logic controller. The method comprises generating a process knowledge graph and a domain knowledge graph based on an analysis of a plurality of engineering projects. The method further comprises receiving a process and instrumentation diagram associated with an engineering project (106). The method further comprises determining, by the processing unit (202), a set of processes in the engineering project (106) based on an application of an image processing algorithm on the process and instrumentation diagram. The method further comprises generating, by the processing unit (202), a binary code for the programmable logic controller (648) based on an analysis of the process and instrumentation diagram, the process knowledge graph and the domain knowledge graph

## Description

The present invention relates to a field of engineering of computer assisted programming, and more particularly relates to a method and system for automatic generation of domain based binary code for programmable logic controller.

An engineering project comprises a plurality of engineering objects which function together to complete a plurality of industrial processes in the engineering project. Examples of the plurality of engineering objects includes but is not limited to a programmable logic controller, one or more field devices, or any other automation devices. Examples of the one or more field devices includes but is not limited to, motors, rotors, mixers, furnaces, heaters, refrigerators, control valves, pumps, and actuators.

The engineering project is configured to execute an engineering program to control the plurality of engineering objects to perform the plurality of industrial processes in a technical installation. Examples of the technical installation includes but is not limited to a power plant, a manufacturing plant, and a water treatment plant. The engineering program comprises programming code which is executed by a programmable logic controller to control the plurality of engineering objects in the engineering project. In one example, the engineering program comprises programming code written in at least one of an International electrotechnical commission programming language (IECPL), JAVA, C++ or python.

In conventional systems, the engineering program is coded by a human code developer. To code the engineering program efficiently, the human code developer has to study and analyze a plurality of parameters associated with the engineering project as well as a plurality of parameters associated with each engineering object of the plurality of engineering objects.

Each engineering object of the plurality of engineering objects has a plurality of variants which are manufactured by one or more original equipment manufacturers. Each variant of the plurality of variants of a specific engineering object differs from other variants in one or more attributes such as power rating, voltage rating, software configurations, and hardware configurations. In one example, the plurality of parameters of the plurality of engineering objects comprises information associated with the plurality of variants of the plurality of engineering objects. The human code developer is required to understand the plurality of variants of the plurality of engineering object to code the engineering program. Thus, manually coding the engineering program is a time consuming, difficult, and laborious activity for the human code developer.

In light of above, there exists a need for an efficient method and system for generating domain based binary code for programmable logic controllers.

The object of the invention is achieved by a method of automatically binary code for a programmable logic controller. The binary code is associated with an engineering program comprised in an enginering project. The engineering project is configured to execute the engineering program to implement a specific objective in a technical installation. Examples of the technical installation includes but is not limited to a power plant, a manufacturing plant, and a water treatment plant.

In a preferred embodiment, the method comprises receiving, by a processing unit, a plurality of engineering projects. The plurality of engineering projects comprises a plurality of engineering objects configured to implement a plurality of industrial processes in a technical installation. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators.

The plurality of engineering projects comprises information associated with a plurality of domains of each engineering project of the plurality of engineering projects are implemented. A domain of a specific engineering project is indicative of at least one of a field of operation of the engineering project, a geographical location of the engineering project, and a process related constraints associated with the engineering project. In one example, the domain of the specific engineering object is indicative of a specific process related constraint associated with the engineering project, such as an energy use constraint associated with the engineering project, an efficiency constraint associated with the engineering project, a cost constraint associated with the engineering project and a tolerance constraint associated with the engineering project.

The plurality of engineering projects comprises at least one process and instrumentation diagram and at least one functional description diagram associated with each engineering project of the plurality of engineering project. The at least one process and instrumentation diagram of each engineering project of the plurality of engineering projects comprises information regarding interconnections between the plurality of engineering objects in the engineering project. Furthermore, the at least one functional description diagram of each engineering project of the plurality of engineering project comprises information associated a plurality of processes in the plurality of engineering projects. Examples of the plurality of processes includes but is not limited to a washing process, a blending process and a mixing process.

The functional description diagram of each engineering project of the plurality of engineering projects further comprises information associated with a set of engineering object which implement each process of the plurality of processes in the plurality of engineering projects. The at least one functional description diagram of each engineering project of the plurality of engineering projects further comprises information associated with an order in which each process of the plurality of processes are executed in the plurality of engineering projects. The at least one functional description diagram of each engineering project of the plurality of engineering projects further comprises information associated with a plurality of dependencies and interconnections between each process of the plurality of processes in the plurality of engineering projects.

The plurality of engineering projects further comprises a plurality of programming blocks associated with the plurality of engineering objects of the plurality of engineering projects. The plurality of programming blocks comprises source code, which when executed by controller device such as a programmable logic controller, causes the programmable logic controller to control the plurality of engineering object to execute the plurality of processes in the plurality of engineering projects. Each programming block of the plurality of programming block is configured to control a specific engineering object of the plurality of engineering objects of the plurality of engineering projects. Thus, in other words, each programming block of the plurality of programming blocks represents a specific engineering object of the plurality of engineering objects of the plurality of engineering projects.

The method further comprises analyzing, by the processing unit, the at least one process instrumentation diagram and the at least one functional description diagram of the plurality of engineering projects to determine a domain of each engineering project of the plurality of engineering projects. In one example, the processing unit is configured to determine the domain of each engineering project by application of a image processing algorithm on the at least one process instrumentation diagram and the at least one functional description diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams and a plurality of labelled functional description diagram. A plurality of labels in the plurality of labelled process and instrumentation diagrams and the plurality of labelled functional description diagram indicate a domain of an engineering project associated with each of the plurality of labelled process and instrumentation diagrams and the plurality of labelled functional description diagram. In another example, the method comprises receiving, by the processing unit, a plurality of annotations from the user. The plurality of annotations comprise information associated with a domain associated with each engineering project of the plurality of engineering projects. In such a case, the method comprises analyzing, by the processing unit, the plurality of annotations received from the user to determine the domain associated with each engineering project of the plurality of engineering projects.

The method further comprises generating, by the processing unit, a domain based knowledge graph based on an analysis of the determined domain of each engineering project of the plurality of engineering projects and further based on an analysis of the plurality of programming blocks in the plurality of engineering projects. The domain based knowledge graph comprises information associated with a plurality of interrelationships between one or more portions of an engineering project and other engineering projects of the plurality of engineering projects. In one example, the plurality of interrelationships comprises information associated with commonalities between a first engineering program of a first engineering project belonging to a first domain and a second engineering program of a second engineering project belonging to a second domain. In another example, the plurality of interrelationships comprises information associated with differences between the first engineering program of the first engineering project belonging to the first domain and the second engineering program of the second engineering project belonging to the second domain. In yet another example, the plurality of interrelationships comprises information associated with differences between a first process and instrumentation diagram of the first engineering project belonging to the first domain and a second process and instrumentation diagram of the second engineering project belonging to the second domain. The generated domain knowledge graph further comprises information associated with domain standards, safety standards, and redundancy requirements associated with each domain of the plurality of engineering projects.

The method further comprises analyzing, by the processing unit, the at least one process instrumentation diagram of the plurality of engineering projects to determine a plurality of processes in the at least one process and instrumentation diagram. The plurality of processes in each engineering project by application of an image processing algorithm on the at least one process instrumentation diagram. In one example, the plurality of processes are determined in a plurality of steps.

A first step of the plurality of comprises determining, by the processing unit, a plurality of tiles in the at least one process and instrumentation diagram. The plurality of tiles comprises a plurality of symbols in the at least one process and instrumentation diagram. The plurality of symbols in the at least one process and instrumentation diagram includes a first set of symbols which are indicative of a plurality of components of each engineering project of the plurality of engineering projects. The plurality of components include one or more engineering objects and one or more connection lines which define interconnections between the plurality of engineering projects. The plurality of symbols further comprises a second set of symbols which are indicative of flow directions, safety and control systems, pressure ratings and other key piping and instrument details of the engineering project. In one example, each of the plurality of tiles represent the plurality of engineering objects such as motors, valves and pipes in each engineering project of the plurality of engineering projects.

A second step of the plurality of steps comprises combining, by the processing unit, two or more tiles of the plurality of tiles to generate a plurality of modules. In one example, the two or more tiles of the plurality of tiles are combined based on one or more interconnections between the two or more tiles of the plurality of tiles. Each module of the plurality of modules comprises information associated with a specific functional block of at least one process of the plurality of processes in the at least one process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit is configured to identify each module of the plurality of modules based on an application of an optical character recognition algorithm on the at least one process and instrumentation diagram.

A third step of the plurality of steps comprises combining, by the processing unit, two or mode modules of the plurality of modules to determine the plurality of processes of each engineering project of the plurality of engineering projects. In one example, the at least one process and instrumentation diagram comprises information associated with each process in the plurality of processes in each engineering project of the plurality of engineering projects.

The method further comprises analyzing, by the processing unit, the plurality of processes of the plurality of engineering projects, the plurality of engineering objects and the plurality of programming blocks in the plurality of engineering projects to determine a plurality of interrelationships between the plurality of programming blocks and the plurality of processes of the plurality of engineering projects. In one example, the processing unit is configured to receive a plurality of process based annotations from the user. The plurality of process based annotations comprises information associated with interrelationship between the plurality of processes and the plurality of programming blocks in the plurality of engineering projects. For example, the plurality of process based annotations maps each process of the plurality of processes of the plurality of engineering objects, to a specific programming block of the plurality of programming block of the plurality of engineering projects. In such a case, the processing unit is configured to determine the plurality of interrelationships between the plurality of programming blocks and the plurality of processes of the plurality of engineering projects based on an analysis of the process based annotations.

The method further comprises generating, by the processing unit, a process based knowledge graph based on an analysis of the plurality of interrelationships between the plurality of programming blocks and the plurality of processes of the plurality of engineering projects. The process based knowledge graph comprises information that maps each process of the plurality of processes of the plurality of engineering objects, to a specific programming block of the plurality of programming block of the plurality of engineering projects.

In the preferred embodiment, the method further comprises receiving, by the processing unit, a process and instrumentation diagram associated with an engineering project. The process and instrumentation diagram comprises is a pictorial representation of a set of processes which are to be implemented in the engineering project. In one example, the Process and Instrumentation Diagram, shows how a plurality of process equipment is connected in the engineering project. Furthermore, the process and instrumentation diagram comprises information associated with flow directions, safety and control systems, pressure ratings and other key piping and instrument details of the engineering project.

In one example, the process and instrumentation diagram further comprises information associated with a domain in which the engineering project is implemented. The processing unit is configured to receive the process and instrumentation diagram via an input device such as a camera or a scanner. In one example, the process and instrumentation diagram is an image file such as JPEG, or a bitmap image. In another example, the received process and instrumentation diagram is a portable document format.

In one example, the process and instrumentation diagram further comprises information associated with a set of engineering object 108A-Ns in the engineering project. Furthermore, the process and instrumentation diagram comprises information associated with interconnection between the set of engineering object 108A-Ns. In yet another example, the process and instrumentation diagram comprises information associated with one or more sensors which are used in the engineering project. Examples of the one or more sensors includes but is not limited to a temperature sensor, a pressure sensor, and a vibration sensor.

In the preferred embodiment, the method further comprises applying, by the processing unit, an image processing algorithm on the received process and instrumentation diagram to determine a plurality of tiles in the process and instrumentation diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams.

The plurality of labelled process and instrumentation diagram comprises pictorial representations of a set of processes. The pictorial representations are labelled with a plurality of labels comprising information associated with a name of a plurality of components and also meaning of a plurality of symbols used in the plurality of process and instrumentation diagrams. Examples of the image processing algorithm includes but is not limited to a single shot detector algorithm, a spatial pyramid pooling algorithm, a you look only once algorithm, and a histogram of oriented gradients algorithm.

In the preferred embodiment, the method comprises determining, by the processing unit, the plurality of tiles in the process and instrumentation diagram. The plurality of tiles comprises the plurality of symbols in the process and instrumentation diagram. The plurality of symbols in the process and instrumentation diagram includes a first set of symbols which are indicative of a plurality of components of the engineering project. The plurality of components include one or more engineering objects and one or more connection lines which define interconnections between the one or more engineering objects. The plurality of symbols further comprises a second set of symbols which are indicative of flow directions, safety and control systems, pressure ratings and other key piping and instrument details of the engineering project. In one example, each of the plurality of tiles represent one or more engineering objects such as motors, valves and pipes in the engineering project.

In the preferred embodiment, the method further comprises combining, by the processing unit, two or more tiles of the plurality of tiles to generate a plurality of modules. Each module of the plurality of modules comprises information associated with a specific functional block of at least one process of the plurality of processes in the process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit is configured to identify each module of the plurality of modules based on an analysis of the process and instrumentation diagram.

In the preferred embodiment, the method further comprises combining, by the processing unit, two or mode modules of the plurality of modules to determine the set of processes of the engineering project. In one example, the process and instrumentation diagram comprises information associated with each process in the plurality of processes in the engineering project. In such a case, the processing unit is configured to combine the two or more modules based on an analysis of the information associated with each process in the plurality of processes.

In another example, the processing unit is configured to determine a plurality of interconnections between the set of processes by an analysis of the process and instrumentation diagram. In one example, the plurality of interconnections between the set of processes are denoted as interconnections between the set of engineering object 108A-Ns in the process and instrumentation diagram.

The method further comprises generating, by the processing unit, a flowchart based on an analysis of the set of processes in the engineering project. The flowchart comprises information associated with an order in which the set of processes are executed in the engineering project. Furthermore, the flowchart comprises information associated with engineering object details, communication protocols, components, modules, and units involved in each process in the set of processes. Furthermore, the method further comprises generating, by the processing unit, a domain parser based on an analysis of the process and instrumentation diagram and the generated domain knowledge graph. The domain parser comprises information indicative of domain standards, safety standards, and redundancy requirements associated with a specific domain of the engineering project.

The method further comprises mapping, by the processing unit, each process in the flowchart to one or more programming blocks of the plurality of programming blocks based on an analysis of the process knowledge graph. It is noted that the process knowledge graph comprises information indicative of mappings between the plurality of programming blocks and the plurality of processes of the plurality of engineering projects. Thus, the processing unit is configured to analyse the information indicative of mappings between the plurality of programming blocks and the plurality of processes of the plurality of engineering projects. Furthermore, the processing unit is further configured to map each process in the set of processes in the flowchart to the one or more programming blocks of the plurality of programming blocks based on the analysis.

The method further comprises selecting, by the processing unit, a set of programming blocks from the plurality of programming blocks based on an analysis of the mapped one or more programming blocks and the domain knowledge graph. In one example, each programming block of the set of programming blocks corresponds to a specific process of the set of processes in the generated flowchart. Furthermore, each programming block of the set of programming blocks corresponds to a specific domain of the engineering project. It is noted that the generated domain knowledge graph further comprises information associated with domain standards, safety standards, and redundancy requirements associated with each domain of the plurality of engineering projects. Thus, each programming block of the set of programming blocks are selected such that the programming block corresponds to domain standards, safety standards, and redundancy requirements associated with a specific domain of the engineering project.

The method further comprises generating, by the processing unit, an engineering program for the engineering project based on an analysis of the selected set of programming blocks. In one example, the processing unit is configured to append the selected set of programming blocks based on an arrangement of the set of processes in the generated flowchart to generate the engineering program. The processing unit further comprises converting the generated engineering program to a binary code which can be exported and run in a Programmable logic controller device.

The method further comprises rectifying, by the processing unit, the generated engineering program based on an application of a crawler logic on the generated engineering program. In one example, the crawler logic comprises information associated with the process knowledge graph and the domain knowledge graph. Furthermore, the crawler logic comprises information associated with control segment specification, hardware architecture associated with each engineering project of the plurality of engineering projects. The crawler logic is configured to compare the generated binary code with an automation system logic which is fed into the crawler logic by a user. The crawler logic is configured to recommend modifications to the engineering program based on the comparison. Furthermore, the crawler logic is further configured to recommend modifications further based on the control segment specification and the hardware architecture associated with each engineering project of the plurality of engineering projects.

The object of the present invention is also achieved by an engineering system for automatic configuration of engineering objects. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of automatic generation of domain based binary logic for a programmable logic controller, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-E: is a process flowchart illustrating an exemplary method of automatically generating domain based binary logic for a programmable logic controller, according to an embodiment of the present invention;
- FIG 5: is a schematic representation of an exemplary process of determining a plurality of processes in a process and instrumentation diagram, according to an embodiment of the present invention; and
- FIG 6: is a schematic representation of an exemplary flowchart comprising a set of processes in an engineering project, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

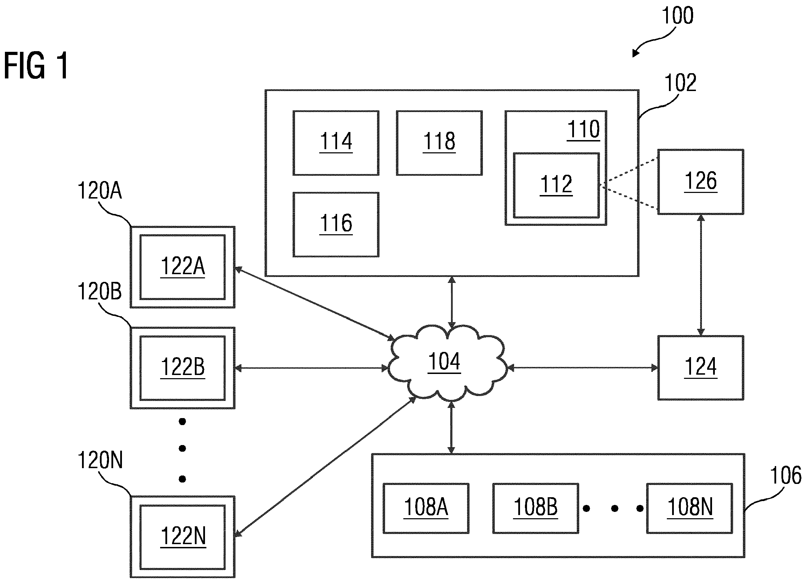

FIG 1 is a block diagram of an industrial environment 100 capable of automatic generation of domain based binary logic for a programmable logic controller, according to an embodiment of the present invention. In FIG 1, the industrial environment 100 includes an engineering system 102, the engineering project 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a technical installation via the network 104 (such as Local Area Network (LAN), Wide Area Network (WAN), Wi-Fi, Internet, any short range or wide range communication). The engineering system 102 is also connected to the one or more client devices 120A-N via the network 104. The technical installation functions smoothly by use of the engineering project 106.

The engineering project 106 comprises a set of engineering object 108A-Ns 108A-N. Examples of the set of engineering object 108A-Ns 108A-N may include, for example, a programmable logic controller, one or more field devices, or any other automation devices. Examples of the one or more field devices includes but is not limited to, motors, rotors, mixers, furnaces, heaters, refrigerators, control valves, pumps, and actuators.

The set of engineering object 108A-Ns 108A-N are operated by use of the plurality of virtual engineering objects which are executed in a processing unit of an industrial control system. The engineering project 106 is configured to control the set of engineering object 108A-Ns 108A-N to achieve a specific objective in the technical installation. Examples of the technical installation includes, a power plant, a manufacturing plant, and a water treatment plant.

Each engineering object of the set of engineering object 108A-Ns 108A-N has a plurality of properties which are described in a plurality of documents present inside the engineering project 106. The plurality of properties includes but is not limited to information associated with compatibility of each engineering objects with other engineering objects of the set of engineering object 108A-Ns 108A-N, temperature rating, pressure rating, a function in the engineering project 106, configuration settings associated with the set of engineering object 108A-Ns 108A-N and residual life of the set of engineering object 108A-Ns 108A-N. The plurality of documents comprises process related documents like process operation description document, process flowchart, and process control philosophy, process and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

In one example, the plurality of documents comprises a list of measurements taken by a plurality of field sensors from the set of engineering object 108A-Ns 108A-N. In such a case, the plurality of dependencies comprises information associated with interelationships between a first property of the specific engineering object and a measurement taken by a specific field sensor of the plurality of field sensors.

In one example, the specific field sensor is a temperature sensor which detects a temperature of the specific engineering object. Furthermore, the voltage rating of the specific engineering object is dependent on the temperature detected by the temperature sensor. In such a case, the plurality of documents comprise information associated with variation of the voltage rating based on the detected temperature.

The engineering system 102 is connected to the set of engineering object 108A-Ns 108A-N in the engineering project 106 via the network 104. The set of engineering object 108A-Ns 108A-N may be connected to each other or several other components (not shown in FIG 1) via physical connections. The physical connections may be through wiring between the set of engineering object 108A-Ns 108A-N. Alternatively, the set of engineering object 108A-Ns 108A-N is connected via non-physical connections (such as Internet of Things (IOT)) and 5G networks. Although, FIG 1 illustrates the engineering system 102 connected to one engineering project 106, one skilled in the art can envision that the engineering system 102 can be connected to several engineering projects 106 located at different geographical locations via the network 104.

The one or more client devices 120A-N may be a desktop computer, laptop computer, tablet, smart phone and the like. Each of the one or more client devices 120A-N is provided with an 122A-N for generating and/or editing a plurality of engineering programs. For example, the one or more client devices 120A-N can access the engineering system 102 for automatically generating engineering programs. The one or more client devices 120A-N can access cloud applications (such as providing performance visualization of the set of engineering object 108A-Ns 108A-N via a web browser). Throughout the specification, the terms "client device" and "user device" are used interchangeably.

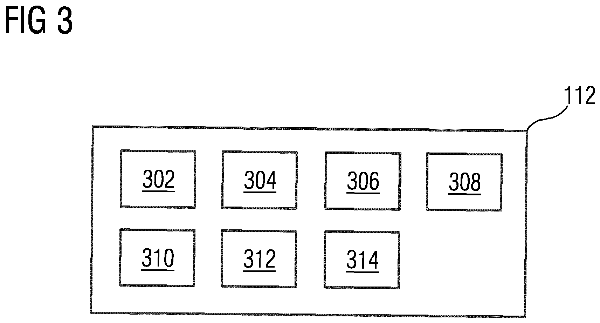

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing a technical installation comprising the set of engineering object 108A-Ns 108A-N. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the technical installation, and the one or more client device(s) 120A-N. The interface (such as cloud interface) (not shown in FIG 1) may allow the engineers at the one or more client device (s) 120A-N to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an automation module 112 configured for generating engineering programs. The automation module 112 further comprises a knowledge repository 126 comprising at least one name graph. Details of the automation module 112 is explained in FIG. 3.

The industrial environment 100 further comprises a project repository 124 comprising information associated with a plurality of engineering projects. The plurality of engineering projects comprises information about a plurality of engineering objects configured to implement a plurality of industrial processes in the technical installation. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of industrial processes include, but is not limited to a heating process, a cooling process and a melting process. In one example, the project repository 124 is a database server which is connected to the engineering system 102 via the network 104.

The plurality of engineering projects comprises engineering projects associated with a plurality of domains. Examples of the plurality of domains includes, but is not limited to a chemical domain, a mechanical domain, a manufacturing domain, and an energy domain. Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance.

Each of the plurality of engineering projects comprises at least one process and instrumentation diagram and a set of programming blocks. The process and instrumentation diagram comprises information associated with interconnection between the plurality of engineering objects in each engineering project of the plurality of engineering projects. The set of prgramming blocks comprises programming code which is executed by a controller device to control operations of the plurality of engineering objects.

In one example, the set of programming blocks are written in a hybrid format comprising a combination of an object-oriented programming format and a process-oriented programming format. In one example, the set of programming blocks comprises a plurality of classes. Each class of the plurality of classes comprises programming logic associated with a specific engineering object of the plurality of engineering objects in the plurality of engineering projects. The plurality of programming blocks further comprises one or more programming blocks associated with each domain of a plurality of domains of the plurality of engineering projects.

The database 118 stores the information relating to the technical installation and the one or more client device(s) 120AN. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the set of engineering object 108A-Ns 108A-N, test results, simulation results, status messages, one or more simulation instances, graphical programs, program logics, program logic patterns, product manuals of the set of engineering object 108A-Ns 108A-N and engineering object properties, one or more engineering object blocks, relationship information between the engineering objects, requirements, program update messages and the like.

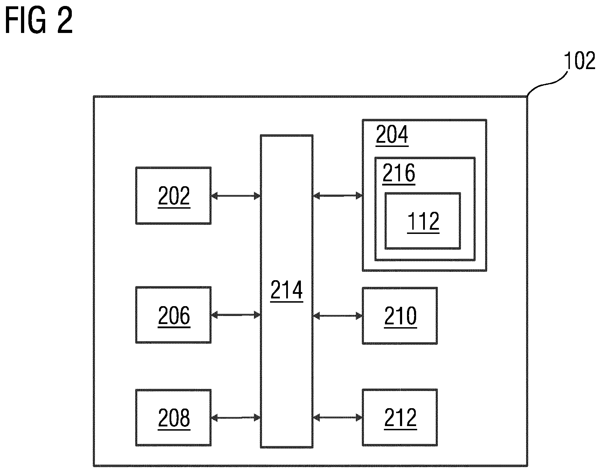

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

When executed by the processing unit 202, the automation module 112 causes the processing unit 202 to receive the plurality of engineering projects.

The plurality of engineering projects comprises a plurality of engineering objects configured to implement a plurality of industrial processes in a technical installation. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators.

The plurality of engineering projects comprises information associated with a plurality of domains of each engineering project of the plurality of engineering projects are implemented. A domain of a specific engineering project is indicative of at least one of a field of operation of the engineering project, a geographical location of the engineering project, and a process related constraints associated with the engineering project. In one example, the domain of the specific engineering object is indicative of a specific process related constraint associated with the engineering project, such as an energy use constraint associated with the engineering project, an efficiency constraint associated with the engineering project, a cost constraint associated with the engineering project and a tolerance constraint associated with the engineering project.

The plurality of engineering projects comprises at least one process and instrumentation diagram and at least one functional description diagram associated with each engineering project of the plurality of engineering project. The at least one process and instrumentation diagram of each engineering project of the plurality of engineering projects comprises information regarding interconnection between the plurality of engineering objects in the engineering project. Furthermore, the at least one functional description diagram of each engineering project of the plurality of engineering project comprises information associated a plurality of processes in the plurality of engineering projects. Examples of the plurality of processes includes but is not limited to a washing process, a blending process and a mixing process.

The functional description diagram of each engineering project of the plurality of engineering projects further comprises information associated with a set of engineering object 108A-Ns which implement each process of the plurality of processes in the plurality of engineering projects.

The at least one functional description diagram of each engineering project of the plurality of engineering projects further comprises information associated with an order in which each process of the plurality of processes are executed in the plurality of engineering projects. The at least one functional description diagram of each engineering project of the plurality of engineering projects further comprises information associated with a plurality of dependencies and interconnections between each process of the plurality of processes in the plurality of engineering projects.

The plurality of engineering projects further comprises a plurality of programming blocks associated with the plurality of engineering objects of the plurality of engineering projects. The plurality of programming blocks comprises source code, which when executed by controller device such as a programmable logic controller, causes the programmable logic controller to control the plurality of engineering object to execute the plurality of processes in the plurality of engineering projects. Each programming block of the plurality of programming block is configured to control a specific engineering object of the plurality of engineering objects of the plurality of engineering projects. Thus, in other words, each programming block of the plurality of programming blocks represents a specific engineering object of the plurality of engineering objects of the plurality of engineering projects.

The automation module 112 further causes the processing unit 202 to analyze the at least one process instrumentation diagram and the at least one functional description diagram of the plurality of engineering projects to determine a domain of each engineering project of the plurality of engineering projects. In one example, the processing unit 202 is configured to determine the domain of each engineering project by application of a image processing algorithm on the at least one process instrumentation diagram and the at least one functional description diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams and a plurality of labelled functional description diagram. A plurality of labels in the plurality of labelled process and instrumentation diagrams and the plurality of labelled functional description diagram indicate a domain of an engineering project associated with each of the plurality of labelled process and instrumentation diagrams and the plurality of labelled functional description diagram. In another example, the method comprises receiving, by the processing unit 202, a plurality of annotations from the user. The plurality of annotations comprise information associated with a domain associated with each engineering project of the plurality of engineering projects. In such a case, the method comprises analyzing, by the processing unit 202, the plurality of annotations received from the user to determine the domain associated with each engineering project of the plurality of engineering projects.

The automation module 112 further causes the processing unit 202 to generate a domain based knowledge graph based on an analysis of the determined domain of each engineering project of the plurality of engineering projects and further based on an analysis of the plurality of engineering projects. The domain based knowledge graph comprises information associated with a plurality of interrelationships between one or more portions of an engineering project and other engineering projects of the plurality of engineering projects. In one example, the plurality of interrelationships comprises information associated with commonalities between a first engineering program of a first engineering project belonging to a first domain and a second engineering program of a second engineering project belonging to a second domain. In another example, the plurality of interrelationships comprises information associated with differences between the first engineering program of the first engineering project belonging to the first domain and the second engineering program of the second engineering project belonging to the second domain. In yet another example, the plurality of interrelationships comprises information associated with differences between a first process and instrumentation diagram of the first engineering project belonging to the first domain and a second process and instrumentation diagram of the second engineering project belonging to the second domain. The generated domain knowledge graph further comprises information associated with domain standards, safety standards, and redundancy requirements associated with each domain of the plurality of engineering projects.

The automation module 112 further causes the processing unit 202 to analyze the at least one process instrumentation diagram of the plurality of engineering projects to determine a plurality of processes in the at least one process and instrumentation diagram. The plurality of processes in each engineering project by application of an image processing algorithm on the at least one process instrumentation diagram. In one example, the plurality of processes are determined in a plurality of steps.

A first step of the plurality of comprises determining, by the processing unit 202, the plurality of tiles in the at least one process and instrumentation diagram. The plurality of tiles comprises a plurality of symbols in the at least one process and instrumentation diagram. The plurality of symbols in the at least one process and instrumentation diagram includes a first set of symbols which are indicative of a plurality of components of each engineering project of the plurality of engineering projects. The plurality of components include one or more engineering objects and one or more connection lines which define interconnections between the plurality of engineering projects. The plurality of symbols further comprises a second set of symbols which are indicative of flow directions, safety and control systems, pressure ratings and other key piping and instrument details of the engineering project. In one example, each of the plurality of tiles represent the plurality of engineering objects such as motors, valves and pipes in each engineering project of the plurality of engineering projects.

A second step of the plurality of steps comprises combining, by the processing unit 202, two or more tiles of the plurality of tiles to generate a plurality of modules. Each module of the plurality of modules comprises information associated with a specific functional block of at least one process of the plurality of processes in the at least one process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit 202 is configured to identify each module of the plurality of modules based on an analysis of the process and instrumentation diagram.

A third step of the plurality of steps comprises combining, by the processing unit 202, two or mode modules of the plurality of modules to determine the plurality of processes of each engineering project of the plurality of engineering projects. In one example, the at least one process and instrumentation diagram comprises information associated with each process in the plurality of processes in each engineering project of the plurality of engineering projects.

The automation module 112 further causes the processing unit 202 to analyze the plurality of processes of the plurality of engineering projects, the plurality of engineering objects and the plurality of programming blocks in the plurality of engineering projects to determine a plurality of interrelationships between the plurality of programming blocks and the plurality of processes of the plurality of engineering projects. In one example, the processing unit 202 is configured to receive a plurality of process based annotations from the user. The plurality of process based annotations comprises information associated with interrelationship between the plurality of processes and the plurality of programming blocks in the plurality of engineering projects. For example, the plurality of process based annotations maps each process of the plurality of processes of the plurality of engineering objects, to a specific programming block of the plurality of programming block of the plurality of engineering projects. In such a case, the processing unit 202 is configured to determine the plurality of interrelationships between the plurality of programming blocks and the plurality of processes of the plurality of engineering projects based on an analysis of the process based annotations.

The automation module 112 further causes the processing unit 202 to generate a process based knowledge graph based on an analysis of the plurality of interrelationships between the plurality of programming blocks and the plurality of processes of the plurality of engineering projects. The process based knowledge graph comprises information that maps each process of the plurality of processes of the plurality of engineering objects, to a specific programming block of the plurality of programming block of the plurality of engineering projects.

The automation module 112 further causes the processing unit 202 to receive a process and instrumentation diagram associated with an engineering project 106. The process and instrumentation diagram comprises is a pictorial representation of a set of processes which are to be implemented in the engineering project 106. In one example, the Process and Instrumentation Diagram, shows how a plurality of process equipment is connected in the engineering project 106. Furthermore, the process and instrumentation diagram comprises information associated with flow directions, safety and control systems, pressure ratings and other key piping and instrument details of the engineering project 106.

In one example, the process and instrumentation diagram further comprises information associated with a domain in which the engineering project 106 is implemented. The processing unit 202 is configured to receive the process and instrumentation diagram via an input device such as a camera or a scanner. In one example, the process and instrumentation diagram is an image file such as JPEG, or a bitmap image. In another example, the received process and instrumentation diagram is a portable document format.

In one example, the process and instrumentation diagram further comprises information associated with a set of engineering object 108A-Ns in the engineering project 106. Furthermore, the process and instrumentation diagram comprises information associated with interconnection between the set of engineering object 108A-Ns. In yet another example, the process and instrumentation diagram comprises information associated with one or more sensors which are used in the engineering project 106. Examples of the one or more sensors includes but is not limited to a temperature sensor, a pressure sensor, and a vibration sensor.

The automation module 112 further causes the processing unit 202 to apply an image processing algorithm on the received process and instrumentation diagram to determine a plurality of tiles in the process and instrumentation diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams.

The plurality of labelled process and instrumentation diagram comprises pictorial representations of a set of processes. The pictorial representations are labelled with a plurality of labels comprising information associated with a name of a plurality of components and also meaning of a plurality of symbols used in the plurality of process and instrumentation diagrams. Examples of the image processing algorithm includes but is not limited to a single shot detector algorithm, a spatial pyramid pooling algorithm, a you look only once algorithm, and a histogram of oriented gradients algorithm.

The automation module 112 further causes the processing unit 202 to determine the plurality of tiles in the process and instrumentation diagram. The plurality of tiles comprises the plurality of symbols in the process and instrumentation diagram. The plurality of symbols in the process and instrumentation diagram includes a first set of symbols which are indicative of a plurality of components of the engineering project 106. The plurality of components include one or more engineering objects and one or more connection lines which define interconnections between the one or more engineering objects. The plurality of symbols further comprises a second set of symbols which are indicative of flow directions, safety and control systems, pressure ratings and other key piping and instrument details of the engineering project 106. In one example, each of the plurality of tiles represent one or more engineering objects such as motors, valves and pipes in the engineering project 106.

The automation module 112 further causes the processing unit 202 to combine two or more tiles of the plurality of tiles to generate a plurality of modules. Each module of the plurality of modules comprises information associated with a specific functional block of at least one process of the plurality of processes in the process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit 202 is configured to identify each module of the plurality of modules based on an analysis of the process and instrumentation diagram.

The automation module 112 further causes the processing unit 202 to combine two or mode modules of the plurality of modules to determine the set of processes of the engineering project 106. In one example, the process and instrumentation diagram comprises information associated with each process in the plurality of processes in the engineering project 106. In such a case, the processing unit 202 is configured to combine the two or more modules based on an analysis of the information associated with each process in the plurality of processes.

In another example, the processing unit 202 is configured to determine a plurality of interconnections between the set of processes by an analysis of the process and instrumentation diagram. In one example, the plurality of interconnections between the set of processes are denoted as interconnections between the set of engineering object 108A-Ns in the process and instrumentation diagram.

The automation module 112 further causes the processing unit 202 to generate a flowchart based on an analysis of the set of processes in the engineering project 106. The flowchart comprises information associated with an order in which the set of processes are executed in the engineering project 106. Furthermore, the flowchart comprises information associated with engineering object details, communication protocols, components, modules, and units involved in each process in the set of processes. Furthermore, the automation module 112 further causes the processing unit 202 to generate a domain parser based on an analysis of the process and instrumentation diagram and the generated domain knowledge graph. The domain parser comprises information indicative of domain standards, safety standards, and redundancy requirements associated with a specific domain of the engineering project 106.

The automation module 112 further causes the processing unit 202 to map each process in the flowchart to one or more programming blocks of the plurality of programming blocks based on an analysis of the process knowledge graph. It is noted that the process knowledge graph comprises information indicative of mappings between the plurality of programming blocks and the plurality of processes of the plurality of engineering projects. Thus, the processing unit 202 is configured to analyse the information indicative of mappings between the plurality of programming blocks and the plurality of processes of the plurality of engineering projects. Furthermore, the processing unit 202 is further configured to map each process in the set of processes in the flowchart to the one or more programming blocks of the plurality of programming blocks based on the analysis.

The automation module 112 further causes the processing unit 202 to select a set of programming blocks from the plurality of programming blocks based on an analysis of the mapped one or more programming blocks and the domain knowledge graph. In one example, each programming block of the set of programming blocks corresponds to a specific process of the set of processes in the generated flowchart. Furthermore, each programming block of the set of programming blocks corresponds to a specific domain of the engineering project 106. It is noted that the generated domain knowledge graph further comprises information associated with domain standards, safety standards, and redundancy requirements associated with each domain of the plurality of engineering projects. Thus, each programming block of the set of programming blocks are selected such that the programming block corresponds to domain standards, safety standards, and redundancy requirements associated with a specific domain of the engineering project 106.

The automation module 112 further causes the processing unit 202 to generate an engineering program for the engineering project 106 based on an analysis of the selected set of programming blocks. In one example, the processing unit 202 is configured to append the selected set of programming blocks based on an arrangement of the set of processes in the generated flowchart to generate the engineering program. The processing unit 202 is further configured to convert the generated engineering program to a binary code which can be exported and run in a Programmable logic controller device.

The automation module 112 further causes the processing unit 202 to rectify the generated engineering program based on an application of a crawler logic on the generated engineering program. In one example, the crawler logic comprises information associated with the process knowledge graph and the domain knowledge graph. Furthermore, the crawler logic comprises information associated with control segment specification, hardware architecture associated with each engineering project 106 of the plurality of engineering projects. The crawler logic is configured to compare the generated binary code with an automation system logic which is fed into the crawler logic by a user. The crawler logic is configured to recommend modifications to the engineering program based on the comparison. Furthermore, the crawler logic is further configured to recommend modifications further based on the control segment specification and the hardware architecture associated with each engineering project 106 of the plurality of engineering projects.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102.

In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a natural language processing module 308, an engineering object database 310, a validation module 312 and a deployment module 314. FIG. 3 is explained in conjunction with FIG. 1 and FIG. 2.

The request handler module 302 is configured for receiving the request to generate the engineering program for the engineering project 106. For example, the request is received from one of the one or more users external to the industrial environment 100 via the network 104. In alternative embodiment, the request is received from the one or the one or more client devices 120A-N via the network 104.

The object behavior model generation module 304 is configured for generating the name graph of the plurality of engineering projects. In a preferred embodiment, the generated name graph comprises information about relationships between a set of variables corresponding to each document of the plurality of documents and the plurality of engineering objects 108A-N of the engineering project 106. In one example, the name graph is a knowledge graph based representation comprising a plurality of layers.

The analysis module 306 is configured for analyzing the name graph associated with the automation language markup file associated with the plurality of documents. Specifically, the analysis module 306 is configured for applying the deep learning model on the name graph.

The natural language processing module 308 is configured for extracting the plurality of data items from the plurality of engineering projects.

The engineering object database 310 is configured for generating an engineering object library comprising the generated object behavior models, information about the set of engineering object 108A-Ns 108A-N, information about physical connections between the set of engineering object 108A-Ns 108A-N, and a plurality of parameter values associated with the set of engineering object 108A-Ns 108A-N and the physical connections. The engineering object database 310 is configured for continuously updating the engineering object library with updated versions of the engineering programs. Also, the engineering object database 310 is configured for maintaining the engineering object library in an name graph.

The validation module 312 is configured to generate a simulation instance for the set of engineering object 108A-Ns 108AN of the technical installation. In one example, the simulation instance is a digital twin of the set of engineering object 108A-Ns 108A-N. The validation module 312 is configured to simulate execution of one or more engineering programs by the set of engineering object 108A-Ns 108A-N of the technical installation in a simulation environment by executing the one or more engineering programs on the generated simulation instance.

The deployment module 314 is configured for integrating the plurality of metadata tags 124A-N in real-time onto the set of engineering object 108A-Ns 108A-N installed in the technical installation during runtime.

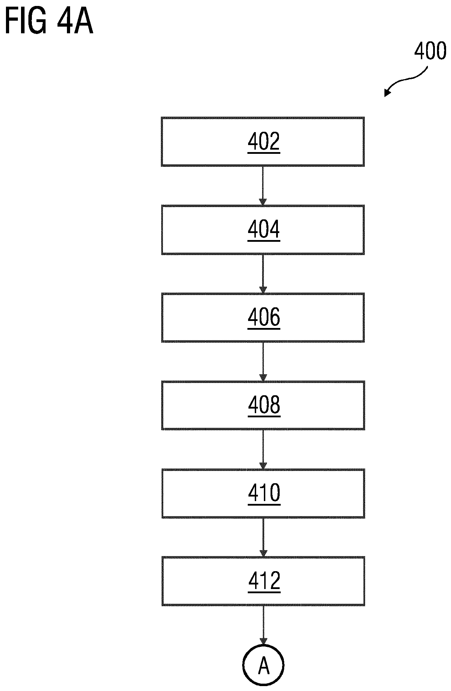

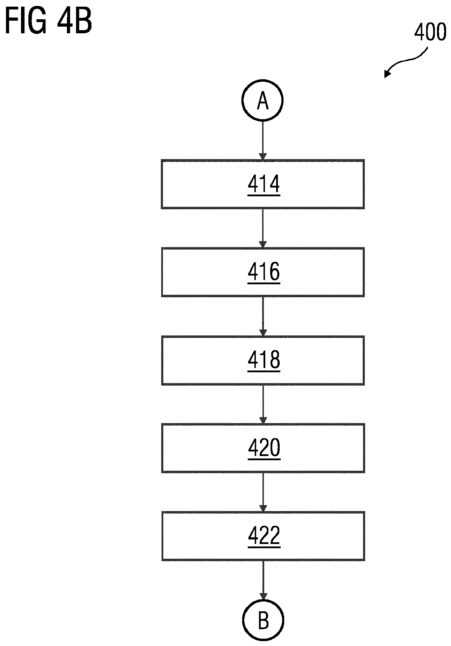

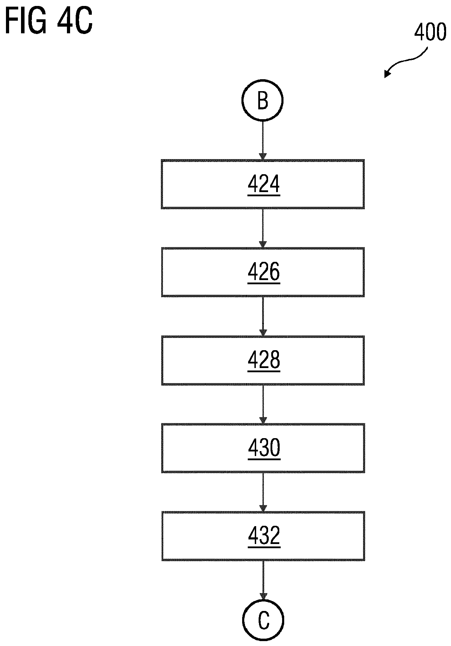

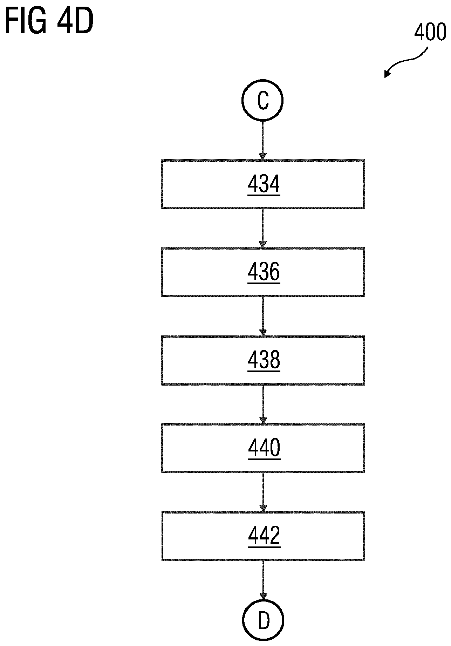

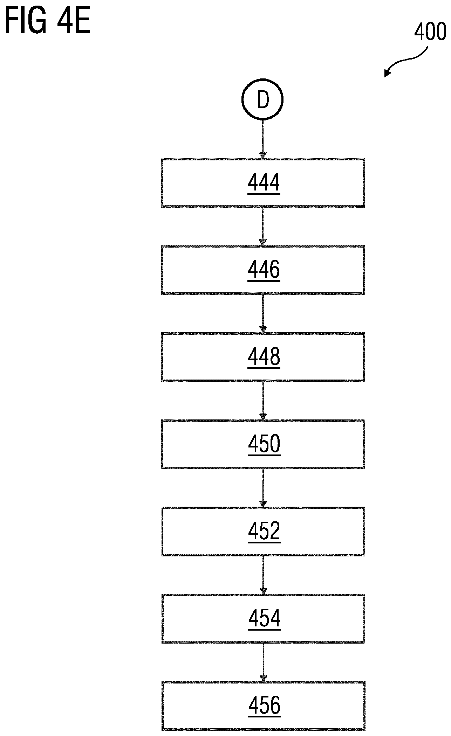

FIG 4A-E is a process flowchart illustrating an exemplary method 400 of generating a binary code for a programmable logic controller , according to an embodiment of the present invention. FIG 4A-E is described in conjunction with FIG 1, 2, and 3.

At step 402, the automation module 112 causes the processing unit 202 to receive the plurality of engineering projects.

The plurality of engineering projects comprises a plurality of engineering objects configured to implement a plurality of industrial processes in a technical installation. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators.

The plurality of engineering projects comprises information associated with a plurality of domains of each engineering project of the plurality of engineering projects are implemented. A domain of a specific engineering project is indicative of at least one of a field of operation of the engineering project, a geographical location of the engineering project, and a process related constraints associated with the engineering project. In one example, the domain of the specific engineering object is indicative of a specific process related constraint associated with the engineering project, such as an energy use constraint associated with the engineering project, an efficiency constraint associated with the engineering project, a cost constraint associated with the engineering project and a tolerance constraint associated with the engineering project.

The plurality of engineering projects comprises at least one process and instrumentation diagram and at least one functional description diagram associated with each engineering project of the plurality of engineering project. The at least one process and instrumentation diagram of each engineering project of the plurality of engineering projects comprises information regarding interconnection between the plurality of engineering objects in the engineering project. Furthermore, the at least one functional description diagram of each engineering project of the plurality of engineering project comprises information associated a plurality of processes in the plurality of engineering projects. Examples of the plurality of processes includes but is not limited to a washing process, a blending process and a mixing process.

The functional description diagram of each engineering project of the plurality of engineering projects further comprises information associated with a set of engineering object 108A-Ns which implement each process of the plurality of processes in the plurality of engineering projects.

The at least one functional description diagram of each engineering project of the plurality of engineering projects further comprises information associated with an order in which each process of the plurality of processes are executed in the plurality of engineering projects. The at least one functional description diagram of each engineering project of the plurality of engineering projects further comprises information associated with a plurality of dependencies and interconnections between each process of the plurality of processes in the plurality of engineering projects.

The plurality of engineering projects further comprises a plurality of programming blocks associated with the plurality of engineering objects of the plurality of engineering projects. The plurality of programming blocks comprises source code, which when executed by controller device such as a programmable logic controller, causes the programmable logic controller to control the plurality of engineering object to execute the plurality of processes in the plurality of engineering projects. Each programming block of the plurality of programming block is configured to control a specific engineering object of the plurality of engineering objects of the plurality of engineering projects. Thus, in other words, each programming block of the plurality of programming blocks represents a specific engineering object of the plurality of engineering objects of the plurality of engineering projects.

At step 404, the automation module 112 further causes the processing unit 202 to analyze the at least one process instrumentation diagram and the at least one functional description diagram of the plurality of engineering projects to determine a domain of each engineering project of the plurality of engineering projects. In one example, the processing unit 202 is configured to determine the domain of each engineering project by application of a image processing algorithm on the at least one process instrumentation diagram and the at least one functional description diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams and a plurality of labelled functional description diagram. A plurality of labels in the plurality of labelled process and instrumentation diagrams and the plurality of labelled functional description diagram indicate a domain of an engineering project associated with each of the plurality of labelled process and instrumentation diagrams and the plurality of labelled functional description diagram. In another example, the method comprises receiving, by the processing unit 202, a plurality of annotations from the user. The plurality of annotations comprise information associated with a domain associated with each engineering project of the plurality of engineering projects. In such a case, the method comprises analyzing, by the processing unit 202, the plurality of annotations received from the user to determine the domain associated with each engineering project of the plurality of engineering projects.

At step 406, the automation module 112 further causes the processing unit 202 to generate a domain based knowledge graph based on an analysis of the determined domain of each engineering project of the plurality of engineering projects and further based on an analysis of the plurality of engineering projects. The domain based knowledge graph comprises information associated with a plurality of interrelationships between one or more portions of an engineering project and other engineering projects of the plurality of engineering projects. In one example, the plurality of interrelationships comprises information associated with commonalities between a first engineering program of a first engineering project belonging to a first domain and a second engineering program of a second engineering project belonging to a second domain. In another example, the plurality of interrelationships comprises information associated with differences between the first engineering program of the first engineering project belonging to the first domain and the second engineering program of the second engineering project belonging to the second domain. In yet another example, the plurality of interrelationships comprises information associated with differences between a first process and instrumentation diagram of the first engineering project belonging to the first domain and a second process and instrumentation diagram of the second engineering project belonging to the second domain. The generated domain knowledge graph further comprises information associated with domain standards, safety standards, and redundancy requirements associated with each domain of the plurality of engineering projects.

At step 408, the automation module 112 further causes the processing unit 202 to analyze the at least one process instrumentation diagram of the plurality of engineering projects to determine a plurality of processes in the at least one process and instrumentation diagram. The plurality of processes in each engineering project by application of an image processing algorithm on the at least one process instrumentation diagram. In one example, the plurality of processes are determined in a plurality of steps.

A first step (410) of the plurality of comprises determining, by the processing unit 202, the plurality of tiles in the at least one process and instrumentation diagram. The plurality of tiles comprises a plurality of symbols in the at least one process and instrumentation diagram. The plurality of symbols in the at least one process and instrumentation diagram includes a first set of symbols which are indicative of a plurality of components of each engineering project of the plurality of engineering projects. The plurality of components include one or more engineering objects and one or more connection lines which define interconnections between the plurality of engineering projects. The plurality of symbols further comprises a second set of symbols which are indicative of flow directions, safety and control systems, pressure ratings and other key piping and instrument details of the engineering project. In one example, each of the plurality of tiles represent the plurality of engineering objects such as motors, valves and pipes in each engineering project of the plurality of engineering projects.

A second step (412) of the plurality of steps comprises combining, by the processing unit 202, two or more tiles of the plurality of tiles to generate a plurality of modules. Each module of the plurality of modules comprises information associated with a specific functional block of at least one process of the plurality of processes in the at least one process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit 202 is configured to identify each module of the plurality of modules based on an analysis of the process and instrumentation diagram.

A third step (414) of the plurality of steps comprises combining, by the processing unit 202, two or mode modules of the plurality of modules to determine the plurality of processes of each engineering project of the plurality of engineering projects. In one example, the at least one process and instrumentation diagram comprises information associated with each process in the plurality of processes in each engineering project of the plurality of engineering projects.

At step 416, the automation module 112 further causes the processing unit 202 to analyze the plurality of processes of the plurality of engineering projects, the plurality of engineering objects and the plurality of programming blocks in the plurality of engineering projects to determine a plurality of interrelationships between the plurality of programming blocks and the plurality of processes of the plurality of engineering projects. In one example, the processing unit 202 is configured to receive a plurality of process based annotations from the user. The plurality of process based annotations comprises information associated with interrelationship between the plurality of processes and the plurality of programming blocks in the plurality of engineering projects. For example, the plurality of process based annotations maps each process of the plurality of processes of the plurality of engineering objects, to a specific programming block of the plurality of programming block of the plurality of engineering projects. In such a case, the processing unit 202 is configured to determine the plurality of interrelationships between the plurality of programming blocks and the plurality of processes of the plurality of engineering projects based on an analysis of the process based annotations.

At step 418, the automation module 112 further causes the processing unit 202 to generate a process based knowledge graph based on an analysis of the plurality of interrelationships between the plurality of programming blocks and the plurality of processes of the plurality of engineering projects. The process based knowledge graph comprises information that maps each process of the plurality of processes of the plurality of engineering objects, to a specific programming block of the plurality of programming block of the plurality of engineering projects.

At step 420, the automation module 112 further causes the processing unit 202 to receive a process and instrumentation diagram associated with an engineering project 106. The process and instrumentation diagram comprises is a pictorial representation of a set of processes which are to be implemented in the engineering project 106. In one example, the Process and Instrumentation Diagram, shows how a plurality of process equipment is connected in the engineering project 106. Furthermore, the process and instrumentation diagram comprises information associated with flow directions, safety and control systems, pressure ratings and other key piping and instrument details of the engineering project 106.

In one example, the process and instrumentation diagram further comprises information associated with a domain in which the engineering project 106 is implemented. The processing unit 202 is configured to receive the process and instrumentation diagram via an input device such as a camera or a scanner. In one example, the process and instrumentation diagram is an image file such as JPEG, or a bitmap image. In another example, the received process and instrumentation diagram is a portable document format.

In one example, the process and instrumentation diagram further comprises information associated with a set of engineering object 108A-Ns in the engineering project 106. Furthermore, the process and instrumentation diagram comprises information associated with interconnection between the set of engineering object 108A-Ns. In yet another example, the process and instrumentation diagram comprises information associated with one or more sensors which are used in the engineering project 106. Examples of the one or more sensors includes but is not limited to a temperature sensor, a pressure sensor, and a vibration sensor.

At step 422, the automation module 112 further causes the processing unit 202 to apply an image processing algorithm on the received process and instrumentation diagram to determine a plurality of tiles in the process and instrumentation diagram. In one example, the image processing algorithm is at least one of a pattern recognition algorithm, an object detection algorithm or a semantics extraction algorithm. The image processing algorithm uses an artificial intelligence based model which is trained using a training set comprising a plurality of labelled process and instrumentation diagrams.

The plurality of labelled process and instrumentation diagram comprises pictorial representations of a set of processes. The pictorial representations are labelled with a plurality of labels comprising information associated with a name of a plurality of components and also meaning of a plurality of symbols used in the plurality of process and instrumentation diagrams. Examples of the image processing algorithm includes but is not limited to a single shot detector algorithm, a spatial pyramid pooling algorithm, a you look only once algorithm, and a histogram of oriented gradients algorithm.

At step 424, the automation module 112 further causes the processing unit 202 to determine the plurality of tiles in the process and instrumentation diagram. The plurality of tiles comprises the plurality of symbols in the process and instrumentation diagram. The plurality of symbols in the process and instrumentation diagram includes a first set of symbols which are indicative of a plurality of components of the engineering project 106. The plurality of components include one or more engineering objects and one or more connection lines which define interconnections between the one or more engineering objects. The plurality of symbols further comprises a second set of symbols which are indicative of flow directions, safety and control systems, pressure ratings and other key piping and instrument details of the engineering project 106. In one example, each of the plurality of tiles represent one or more engineering objects such as motors, valves and pipes in the engineering project 106.

At step 426, the automation module 112 further causes the processing unit 202 to combine two or more tiles of the plurality of tiles to generate a plurality of modules. Each module of the plurality of modules comprises information associated with a specific functional block of at least one process of the plurality of processes in the process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, at step 428, the processing unit 202 is configured to identify each module of the plurality of modules based on an analysis of the process and instrumentation diagram.

At step 430, the automation module 112 further causes the processing unit 202 to combine two or mode modules of the plurality of modules to determine the set of processes of the engineering project 106. In one example, the process and instrumentation diagram comprises information associated with each process in the plurality of processes in the engineering project 106. In such a case, at step 432, the processing unit 202 is configured to combine the two or more modules based on an analysis of the information associated with each process in the plurality of processes.

In another example, at step 434, the processing unit 202 is configured to determine a plurality of interconnections between the set of processes by an analysis of the process and instrumentation diagram. In one example, the plurality of interconnections between the set of processes are denoted as interconnections between the set of engineering object 108A-Ns in the process and instrumentation diagram.

At step 436, the automation module 112 further causes the processing unit 202 to generate a flowchart based on an analysis of the set of processes in the engineering project 106. The flowchart comprises information associated with an order in which the set of processes are executed in the engineering project 106. Furthermore, the flowchart comprises information associated with engineering object details, communication protocols, components, modules, and units involved in each process in the set of processes. At step 438, the automation module 112 further causes the processing unit 202 to generate a domain parser based on an analysis of the process and instrumentation diagram and the generated domain knowledge graph. The domain parser comprises information indicative of domain standards, safety standards, and redundancy requirements associated with a specific domain of the engineering project 106.

At step 440, the automation module 112 further causes the processing unit 202 to map each process in the flowchart to one or more programming blocks of the plurality of programming blocks based on an analysis of the process knowledge graph. It is noted that the process knowledge graph comprises information indicative of mappings between the plurality of programming blocks and the plurality of processes of the plurality of engineering projects. Thus, the processing unit 202 is configured to analyse the information indicative of mappings between the plurality of programming blocks and the plurality of processes of the plurality of engineering projects. At step 442, the processing unit 202 is further configured to map each process in the set of processes in the flowchart to the one or more programming blocks of the plurality of programming blocks based on the analysis.

At step 446, the automation module 112 further causes the processing unit 202 to select a set of programming blocks from the plurality of programming blocks based on an analysis of the mapped one or more programming blocks and the domain knowledge graph. In one example, each programming block of the set of programming blocks corresponds to a specific process of the set of processes in the generated flowchart. Furthermore, each programming block of the set of programming blocks corresponds to a specific domain of the engineering project 106. It is noted that the generated domain knowledge graph further comprises information associated with domain standards, safety standards, and redundancy requirements associated with each domain of the plurality of engineering projects. Thus, each programming block of the set of programming blocks are selected such that the programming block corresponds to domain standards, safety standards, and redundancy requirements associated with a specific domain of the engineering project 106.

At step 448, the automation module 112 further causes the processing unit 202 to generate an engineering program for the engineering project 106 based on an analysis of the selected set of programming blocks. In one example, at step 450, the processing unit 202 is configured to append the selected set of programming blocks based on an arrangement of the set of processes in the generated flowchart to generate the engineering program. At step 452, the processing unit 202 is further configured to convert the generated engineering program to a binary code which can be exported and run in a Programmable logic controller device.

At step 454, the automation module 112 further causes the processing unit 202 to rectify the generated engineering program based on an application of a crawler logic on the generated engineering program. In one example, the crawler logic comprises information associated with the process knowledge graph and the domain knowledge graph. Furthermore, the crawler logic comprises information associated with control segment specification, hardware architecture associated with each engineering project 106 of the plurality of engineering projects. The crawler logic is configured to compare the generated binary code with an automation system logic which is fed into the crawler logic by a user. The crawler logic is configured to recommend modifications to the engineering program based on the comparison. Furthermore, the crawler logic is further configured to recommend modifications further based on the control segment specification and the hardware architecture associated with each engineering project 106 of the plurality of engineering projects.

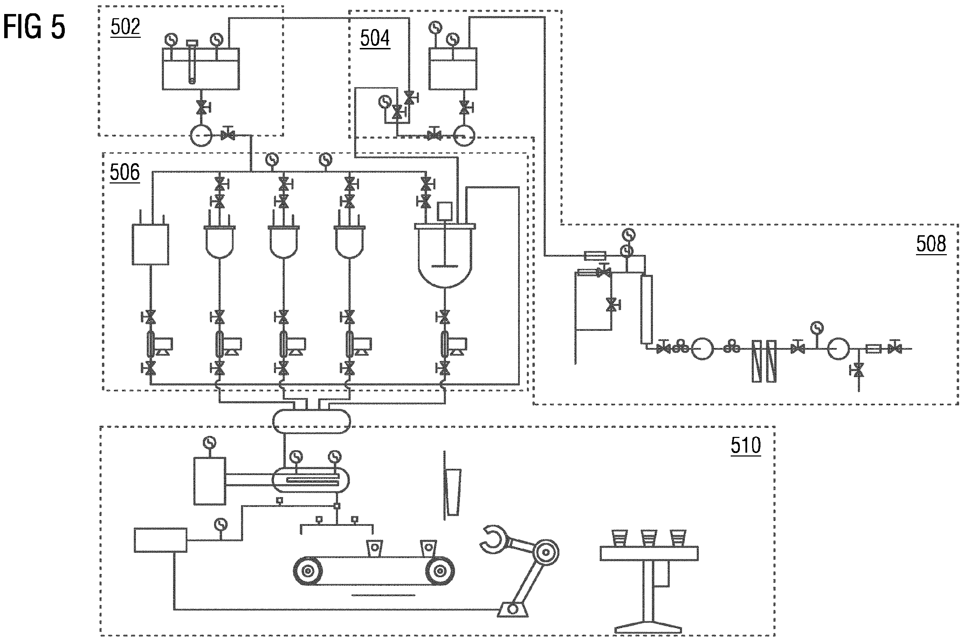

FIG 5 is a schematic representation of an exemplary process of determining a plurality of processes in a process and instrumentation diagram, according to an embodiment of the present invention. FIG 5 illustrate a process and instrumentaion diagram. The processing unit 202 is configured to determine a plurality of processes (502,504, 506, 508, and 510) from the process and instrumentation diagram by application of an image processing algorithm on the process and instrumentation diagram.

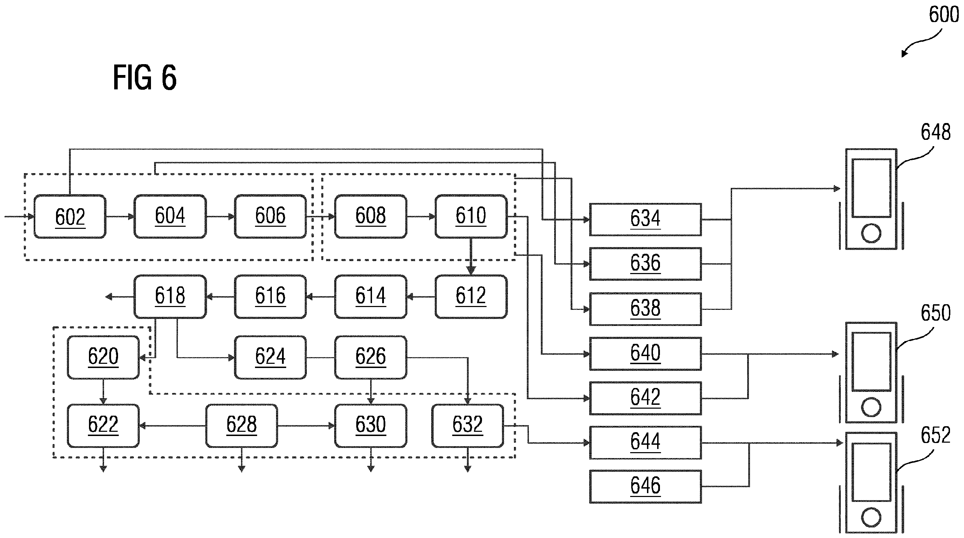

FIG 6 is a schematic representation of an exemplary process of determining a plurality of processes in a process and instrumentation diagram, according to an embodiment of the present invention. FIG 6 illustrate flowchart comprising a set of processes 602-632. The processing unit 202 is configured to generate a plurality of engineerig programs (634-646) for a plurality of programmable logic controllers 648 to 652.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference sign list

1. an industrial environment 100
2. an engineering system 102
3. one or more client devices 120A-N
4. a network 104
5. A set of engineering objects 108A-N
6. a platform 110
7. automation module 112
8. a server 114
9. a network interface 116
10. a database 118
11. a project repository 124
12. knowledge repository 126
13. a processor(s) 202
14. an accessible memory 204
15. a storage unit 206
16. a communication interface 208
17. an input-output unit 210
18. a network interface 212
19. a bus 214
20. an integrated development environment (IDE) 216
21. a request handler module 302,
22. a object behavior model generation module 304,
23. an analysis module 306,
24. a natural language processing module 308
25. an engineering object database 310
26. a validation module 312
27. a deployment module 314.

## Claims

1. A method of automatic generation of domain based binary code for a programmable logic controller (648), the method comprising:
generating, by a processing unit (202), a process knowledge graph and a domain knowledge graph based on an analysis of a plurality of engineering projects, wherein each of the plurality of engineering projects comprises at least one process and instrumentation diagram, at least one functional description diagram, and a plurality of programming blocks;
receiving, by the processing unit (202), a process and instrumentation diagram associated with an engineering project (106), wherein the process and instrumentation diagram comprises information associated with a set of engineering objects 108A-N of the engineering project (106) ;
determining, by the processing unit (202), a set of processes in the engineering project (106) based on an application of an image processing algorithm on the process and instrumentation diagram; and
generating, by the processing unit (202), a binary code for the programmable logic controller (648) based on an analysis of the process and instrumentation diagram, the process knowledge graph and the domain knowledge graph.

2. The method according to claim 1, wherein generating the process knowledge graph based on the analysis of the plurality of engineering projects comprises:
receiving, by the processing unit, the plurality of engineering projects;
determining, by the processing unit (202), a plurality of tiles in the at least one process and instrumentation diagram based on the analysis;
combining, by the processing unit (202), two or more tiles of the plurality of tiles to generate a plurality of modules;
combining, by the processing unit (202), two or mode modules of the plurality of modules to determine a plurality of processes of each engineering project of the plurality of engineering projects;
analyzing, by the processing unit (202), the plurality of processes of the plurality of engineering projects, the plurality of engineering objects and the plurality of programming blocks in the plurality of engineering projects to determine a plurality of interrelationships between the plurality of programming blocks and the plurality of processes of the plurality of engineering projects; and
generating, by the processing unit (202), the process based knowledge graph based on an analysis of the plurality of interrelationships between the plurality of programming blocks and the plurality of processes of the plurality of engineering projects.

3. The method according to claims 1 and 2, wherein generating the domain knowledge graph further comprises:
analyzing, by the processing unit (202), the at least one process instrumentation diagram and the at least one functional description diagram of the plurality of engineering projects to determine a domain of each engineering project of the plurality of engineering projects; and
generating, by the processing unit (202), the domain based knowledge graph based on an analysis of the determined domain of each engineering project of the plurality of engineering projects and further based on an analysis of the plurality of engineering projects.

4. The method according to claim 3, wherein determining, by the processing unit (202), the set of processes in the engineering project (106) comprises:
applying, by the processing unit (202), an image processing algorithm on the received process and instrumentation diagram;
determining, by the processing unit (202), a plurality of tiles in the process and instrumentation diagram; and
combining, by the processing unit, two or more tiles of the plurality of tiles to generate a plurality of modules.

5. The method according to claim 3, wherein determining, by the processing unit (202), the set of processes in the engineering project (106) further comprises:
combining, by the processing unit, two or mode modules of the plurality of modules to determine the set of processes of the engineering project.

6. The method according to claim 5, generating, by the processing unit (202), the binary code for the programmable logic controller (648) comprises:
determining, by the processing unit (202), a plurality of interconnections between the set of processes by an analysis of the process and instrumentation diagram;
generating, by the processing unit, a flowchart based on an analysis of the set of processes in the engineering project; and
mapping, by the processing unit (202), each process in the flowchart to one or more programming blocks of the plurality of programming blocks based on an analysis of the process knowledge graph.

7. The method according to claim 6, generating, by the processing unit (202), the binary code for the programmable logic controller (648) further comprises:
selecting, by the processing unit (202), a set of programming blocks from the plurality of programming blocks based on an analysis of the mapped one or more programming blocks and the domain knowledge graph;
appending, by the processing unit (202), the selected set of programming blocks based on an arrangement of the set of processes in the generated flowchart to generate an engineering program; and
converting, by the processing unit (202), the generated engineering program to a binary code which for the Programmable logic controller device (648).

8. The method according to claim 1, further comprising:
rectifying, by the processing unit, the generated engineering program based on an application of a crawler logic on the generated engineering program;
comparing, by the processing unit, the generated binary code with an automation system logic which is fed into the crawler logic by a user; and
recommend modifications to the engineering program based on the comparison.

9. An engineering system for automatic generation of an engineering program for an engineering project, wherein the engineering system comprises:
one or more processor(s) (202); and
a memory (204) coupled to the one or more processor(s), wherein the memory comprises an automation module (112) stored in the form of machine-readable instructions executable by the one or more processor(s), wherein the automation module (112) is capable of performing a method according to any of the claims 1-8.

10. An industrial environment (100) comprising:
an engineering system (102) as claimed in claim 8;
a technical installation comprising one or more physical components; and
one or more client devices (120A-N) communica-tively coupled to the engineering system (102) via a network (104), wherein the engineering system (102) is configured to perform a method according to any of the claims 1 to 8.

11. A computer-program product, having machine-readable instructions stored therein, that when executed by a processing unit (202), cause the processors to perform a method according to any of the claims 1-8.
